# EUROPEAN PATENT SPECIFICATION

(11) **EP 1 173 952 B1**
(45) Date of publication and mention of the grant of the patent: **15.06.2005**
(21) Application number: 00927415.0
(22) Date of filing: 17.04.2000
(51) Int. Cl.: H04L 12/12, H04L 29/06, G06F 9/46

(54) **REMOTE CONTROL OF A DEVICE**
FERNSTEUERUNG VON EINER VORRICHTUNG
COMMANDE A DISTANCE D'UN DISPOSITIF

(30) Priority: 26.04.1999 US 299954
(43) Date of publication of application: 23.01.2002
(73) Proprietor: International Business Machines Corporation, Armonk, NY 10504 (US)
(72) Inventor: BERSTIS, Viktors, Austin, TX 78746 (US); RODRIGUEZ, Herman, Austin, TX 78730 (US)
(74) Representative: Burt, Roger James, Dr.
(86) International application number: PCT/GB2000/001465
(87) International publication number: WO 2000/065774

(56) References cited:
- EP-A- 0 943 992
- DE-A- 19 737 651
- US-A- 5 949 412

## Description

### Technical Field

This invention relates generally to control of electronic and other devices from a remote location, for example to allow a user to communicate with a home computer via the Internet to control a device at the user's home.

### Description of the Related Art

Systems for controlling electrical devices remotely are well known in the prior art. In the past, electrical devices such as lights, motors, HVAC systems, security systems, and the like, have been controlled through radio frequency links. More recently, it has been proposed to connect one's home computer to a home control system conforming to the X-10 initiative. The X-10 protocol is a method to control a set of home devices with a command interface device without the need of physical wiring between the devices. Rather, existing power lines are used to transmit commands to the receiving devices. In such systems, the user's home computer is connected to the X-10 interface through a serial port connection. Thus, the home computer can be used to control the X-10 interface and, indirectly, the actual physical devices.

It has also been proposed to connect an X-10 system to the Internet to allow a user to monitor his or her home from work or anywhere else using a conventional network connection. These proposals, however, call for a live Internet connection to the user's home computer. A dedicated connection between the user and the home computer is costly both to the user and to the network, and Internet service providers typically have only a limited number of connection ports.

A document, "Enabling Mobile Network Managers", 1997, Sixth International World Wide Web Conference (WWW6) by Reilly et al ("proceedings.www6conf.org/HyperNews/get/PAPER154.html") discloses a way of enabling a mobile user to receive network alarms from a corporate internet having network devices attached thereto and for enabling the user to connect to the corporate internet in order to perform simple management operations on any of those network devices.

A white paper, "Networking Technologies Incorporated in the Cisco NetWorks Product Development Kit", 1998, by Cisco™ Networks discloses a residential gateway between networked information appliances inside the home and an intelligent broadband access network

### BRIEF SUMMARY OF THE INVENTION

Accordingly the invention provides a method for enabling a remote computer having access to a computer network to command a target computer for the purpose of controlling a device associated with said target computer, said computer being able to connect to the network a via service provider computer, characterised by: initiating a service request from the remote computer for requesting a service from the target computer; responsive to the service request, establishing a reverse service provider connection by the service provider between the service provider computer and the target computer; and commanding the target computer from the remote computer over a network connection.

In another aspect, the invention provides a remote computer having access to a computer network, said computer network comprising a service provider computer, said remote computer being able to connect to said computer network via said service provider computer in order to remotely command a target computer for the purpose of controlling a device associated with said target computer, characterised by: a processor; a target control application including means for generating a display interface for use in controlling the device; and a control program executed by the processor comprising: means for issuing a service request for requesting a service from the target computer, wherein responsive to the service request a reverse service provider connection is established by the service provider between the service provider computer and the target computer; and means for controlling the target control application to issue a control command over a network connection to remotely control a device associated with said target computer.

In another aspect, the invention provides a computer program product in a computer readable medium, comprising the target control application and the control program of the preceding paragraph.

According co yet another aspect, the invention provides a target computer able to connect to a service provider computer for the purpose of controlling a device, comprising: a processor; a modem; a target control application for controlling the device; and a control program executed by the processor comprising: means, responsive to an interrupt at the modem from said service provider computer, for switching to a first communications mode; means for executing a login sequence with the service provider computer; and means, responsive to receipt of a control command from a remote computer, for controlling the device through the target control application.

According to yet another aspect, the invention provides a computer program product in a computer readable medium, comprising the target control application and the control program of the preceding paragraph.

According to a yet further aspect, the invention provides a computer operable at a service provider, comprising: a processor; a control program executed by the processor comprising means for establishing a reverse service provider connection between a computer operable at a service provider and a target computer, responsive to a service request from a remote computer, for contacting a target computer for the purpose of controlling a device associated with said target computer; means for executing a login sequence with the target computer.

According to yet another aspect, the invention provides a computer program product in a computer readable medium, comprising the control program of the preceding paragraph.

According to yet another aspect, the invention provides a computer program product in a computer readable medium, comprising: a target control application for use in controlling a device, the target control application having a first component executable on a target computer and a second component executable on a remote computer; and a control routine operable at a service provider, said computer program product characterised by said second component comprising: program code for issuing a service request for requesting a service from the target computer (step 60), wherein responsive to the service request a reverse service provider connection is established by the service provider between a service provider computer and the target computer; and program code for controlling the second component of the target control application to issue a control command to the first component at the target computer to remotely control a device associated with said target computer; and wherein the first component comprises: program code for switching to a communications mode; program code for executing a login sequence to the service provider computer; and program code, responsive to receipt of the control command, for controlling the device through the target control application second component; and said control routine operable at the service provider computer comprising: program code, responsive to the service request from the remote computer, for contacting the target computer; and program code for executing the login sequence with the target computer.

Thus a user may control a target computer from a remote location, through a computer network such as the Internet.

The preferred embodiment provides an access protocol for enabling a user to command a home computer. The remote machine through which the user connects to his or her home PC (ie the target system) may for example be a laptop or other portable computer and this can be used to control a set of devices, e.g., via a smart network such as an X-10 interface. In the preferred embodiment electronic devices in a home are controlled from a remote location using the Internet, but a long distance telephone call or other RF link may alternatively be used. The user may communicate with his or her home computer via the user's Internet service Provider (ISP). An ISP access protocol is implemented by which a user may establish a remote connection to his or her home computer through the user's ISP. The ISP is enabled to contact the user's computer to cause that computer to connect to the Internet so that the computer may receive e-mail or other commands from the user, located elsewhere.

According to the-preferred embodiment, to initiate the protocol, the user launches an application which, via the Internet, sends a request to the user's home computer (or other target). If the home computer is not currently connected to the Internet, the user's ISP dials the home computer. The home computer automatically answers, and the ISP sends authentication information to the computer to establish an Internet connection. With the connection established, an IP address for the home computer is sent back to the user at the remote machine, which then can be used to invoke X-10 functions, telnet sessions, or other activities with the target computer. After an explicit disconnect command or timeout, the target computer is disconnected and may be placed into a low power mode. The ISP may charge a nominal fee for this service.

Thus according to the preferred embodiment, a method is described for enabling a remote machine having access to the Internet to control a computer normally connected to the Internet via a service provider. The method begins by initiating a service request from the remote machine to the computer. The service request may be initiated in an e-mail from the remote machine or by having the user visit a secure Web page from which the remote service may be activated. In response to the service request, an Internet connection is established between the ISP and the computer. For example, this connection is established by executing a login sequence between the ISP and the home computer. If the login sequence is successful, the home computer is placed in a given communications mode (e.g., Point-to-Point Protocol (PPP)) and the ISP issues the home computer an IP address. This IP address is also provided to the remote machine. The user of the remote machine uses the IP address to establish a communications path between a home control application executing on the remote machine and on the home computer. The given application may then effect a control function against a given device.

### BRIEF DESCRIPTION OF THE DRAWINGS

A preferred embodiment of the present invention will now be described in detail, by way of example only, and with reference to the following drawings:
**Figure 1** depicts a conventional client-server information retrieval system used to access the Internet in a known manner;
**Figure 2** depicts the remote home computer control system according to a preferred embodiment of the present invention;
**Figure 3** is a simplified block diagram of an ISP architecture in which a preferred embodiment of the present invention is implemented;
**Figure 4** is a flowchart illustrating a routine for placing a home computer into an operating state from which it may be controlled via a remote machine according to one embodiment of the present invention;
**Figure 5** is a detailed flowchart of a first embodiment of the reverse ISP activation system provisioned according to a preferred embodiment of the present invention; and
**Figure 6** is a user interface for the remote machine according to a preferred embodiment.

### DETAILED DESCRIPTION OF THE PREFERRED EMBODIMENT

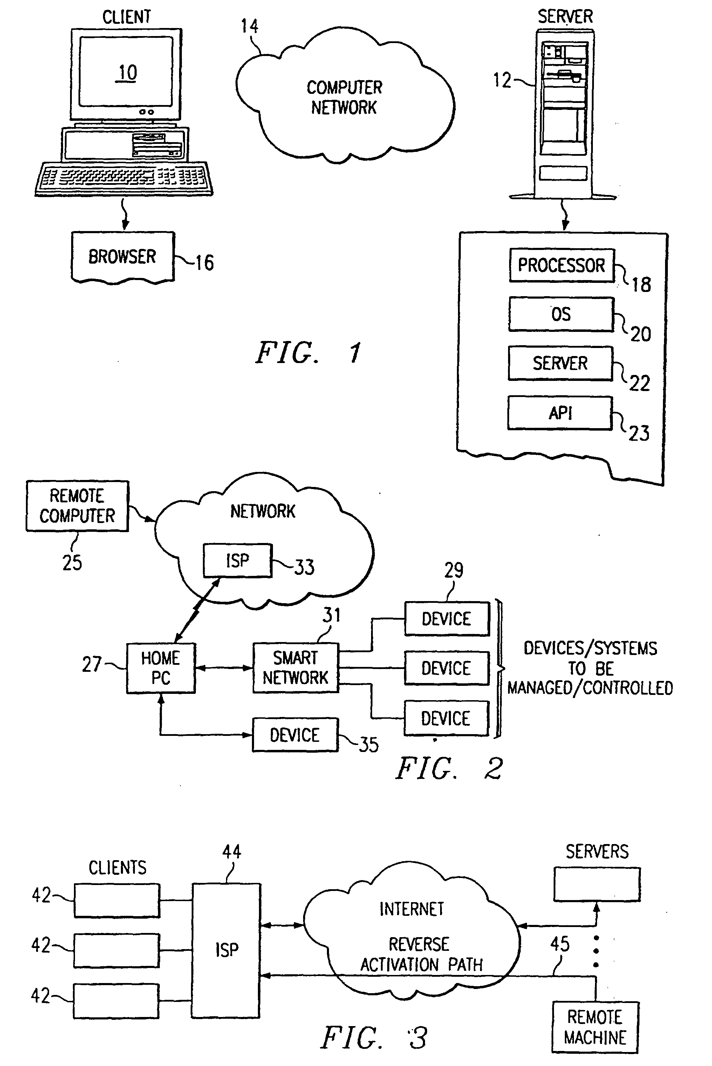

The present invention is preferably implemented in a known client-server system as illustrated in **Figure 1.** By way of brief background, in this system a client machine **10** is connected to a server **12** via network **14.** For illustrative purposes, network **14** may be the Internet, an intranet, an extranet or any other communications network, and the server is a web server. Web server **12** is one of a plurality of servers which are accessible by clients, one of which is illustrated by machine **10.** The client machine includes a browser **16,** which is a known software tool used to access the servers of the network. The Web server supports files (collectively referred to as a Web site) in the form of hypertext documents and objects. In the Internet paradigm, a network path to a server is identified by a so-called Uniform Resource Locator (URL).

A representative Web server **12** is an IBM Netfinity server comprising a RISC-based processor **18,** the AIX® operating system **20** and a Web server program **22,** such as Netscape Enterprise Server. The server **12** also includes an Application Programming Interface (API) **23** that provides extensions to enable application developers to extend and/or customize the core functionality thereof through software programs including Common Gateway Interface (CGI) programs, plug-ins, servlets, active server pages, server side include (SSI) functions or the like.

A representative Web client is a personal computer that is x86-, PowerPC®- or RISC-based, that includes an operating system such as IBM® OS/2® or Microsoft Windows '95, and that includes a Web browser, such as Netscape Navigator 4.0 (or higher), having a Java Virtual Machine (JVM) and support for application plug-ins or helper applications.

Referring now to **Figure 2,** a user having a remote computer **25** can access his or her home-computer **27** via the Internet. As will be seen, according to the preferred embodiment the user accesses his or her home computer **27** (e.g. for the purpose of controlling a device **29** attached to smart network **31** within the home) through the user's own Internet Service Provider (ISP) **33,** although the same service may be offered by another entity (e.g., a dedicated server, another ISP, or the like). ISP **33** includes a server, such as the computer described with reference to figure 1. The user's home computer **27** may control a given device **35,** or the interface (e.g., an X-10 interface) **31** that controls a set of home devices **29.** Representative home devices include, without limitation, lights, a lighting control system, communications equipment, motors, audio/visual equipment, appliances, other computers, HVAC systems and devices, sprinkler systems, security systems, and the like. It will be appreciated that the invention is not limited to control of any particular device, system, component or interface. Moreover, neither is the invention limited to controlling a home computer, but may be used to enable a remote computer user to control a target computer (via the Internet or other computer network) regardless of where the target computer is located.
The remote computer **25** may be a desktop, a laptop, or other portable computer provisioned with suitable devices to connect to the Internet and includes a Web browser. Alternatively, the remote device is a pervasive computing client device, such as a palmtop computer, for example, a device marketed by the IBM Corporation under the WorkPad trademark. Representative devices include a pervasive client that is x86-, PowerPC®- or RISC-based, that includes a runtime operating system such as WindRiver VXWorks™, QSSL WNX4™, or Microsoft Windows CE, and also include a Web browser.

**Figure 3** illustrates a conventional Internet operating environment wherein client machines **42** connect to the Internet via an Internet service provider (ISP) **44.** Typically, an Internet service provider **44** provides Internet access to the users for a monthly, yearly or usage-based service fee, or in some cases no fee at all. Thus, for example, a typical Internet service provider charges a given monthly fee to provide a user of a client machine **42** a certain amount of Internet access. According to the preferred embodiment, a client machine user is provided an option to obtain an additional service whereby the user may access his or her home computer (or other target device) remotely through the ISP, even if the home computer is not then active or currently connected to the ISP or the network. As noted above, this communication path **45** enables the user to control a home device, system or interface from a remote location via the Internet connection established between the ISP and the user's home computer. This communication path is referred to as a reverse ISP connection as, typically, the user connects to the ISP instead of the other way around as described herein. Any fee charged by the ISP for the service may be charged against the user's ISP account.

When a user contracts for his or her Internet service, ISP **44** (if provisioned) offers the reverse ISP activation as an incidental service. The user determines whether he or she desires to accept the service and, if so, whether given limitations are to be placed on the service. Thus, for example, the user may be provided with the option of restricting the number of allowable transactions, perhaps on a per day or per hour basis, or the option of restricting access to the service to certain individuals, by class of service (e.g., based on a self-supplied or third party-supplied rating), or any other such desired restriction.

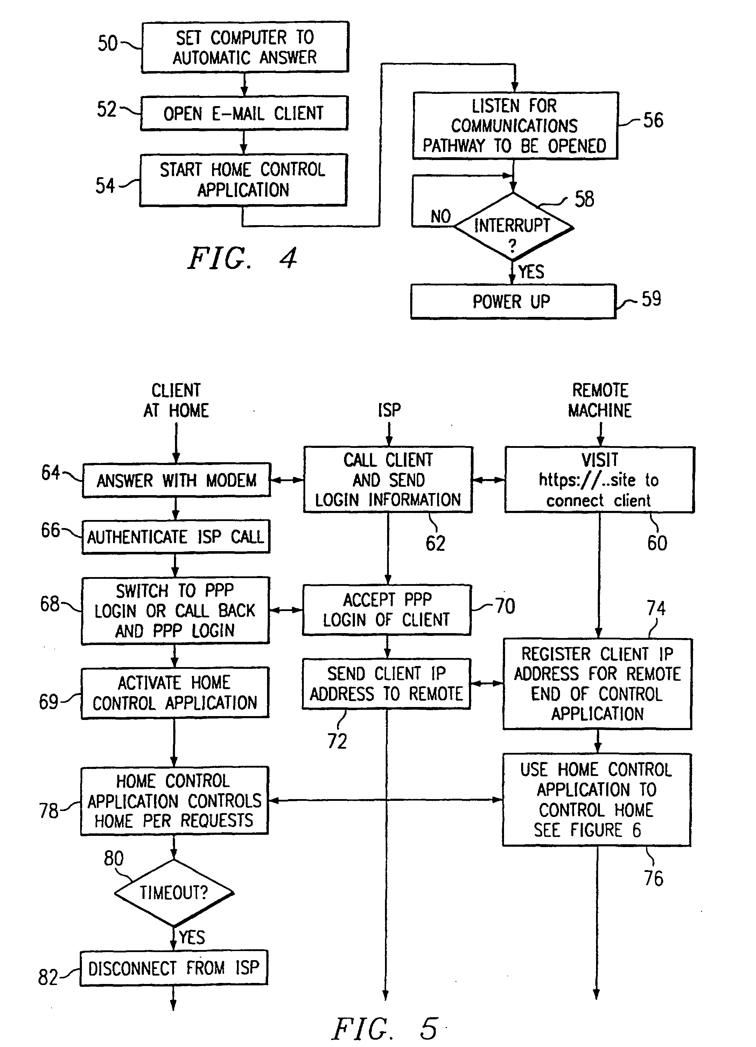

The user's home computer is accessed through the Internet according to the reverse activation protocol described herein. As will be seen, there are several different techniques that may be used to access the user's home computer from the remote location. Regardless of the access method selected, it is preferred that the home computer be powered on but be in a low power or standby mode of operation. **Figure 4** is a simplified flowchart of a routine for accomplishing this functionality at the home computer. This routine assumes that there is no live network connection between the home computer and the ISP. As will be seen, the ISP (or other service provider) establishes a connection to the user's home and wakes-up the user's home computer to enable the user to remotely control the computer through a reverse ISP connection.
In one embodiment, the user sets the home computer's modem to an automatic answer mode of operation at step **50.** At step **52,** the user opens an e-mail client which is used to listen for an e-mail that includes control or operating instructions for the home device, system or interface to be controlled. Step **52** may be omitted if e-mail command operations are not required (e.g., if the user controls the home application via a secure Web page ISP connection, as will be described). At step **54,** the user starts a home control application that is used to perform a given management, monitoring or control function for the home device, system or interface. Alternatively, the home control application is started later after the user accesses the home computer from the remote location, as will be seen. Of course, the sequence of the above steps may be varied.

As will be seen, once the ISP establishes an active connection to the home computer, the user at the remote machine uses the home control application to effect the monitoring or control function. At step **56,** the application listens on a given sockets port (whenever a TCP/IP connection between the client and the ISP is established) to determine whether a communications pathway has been opened. Alternatively, a local proxy server (in the home computer) can be used to shield the application from having knowledge of whether the TCP/IP connection is up or down. At step **58,** the routine continually tests for an interrupt appearing on the modem serial port. Upon receipt, the client machine is powered up at step **59** and is now in a condition to be controlled from the remote location via the reverse ISP activation service.

**Figure 5** is a simplified flowchart of the reverse activation protocol of the preferred embodiment. The user of the remote machine initiates a connection to the home computer by visiting a secure Web site (e.g., a Web site operated by, on behalf of, or for the benefit of, the ISP, or some third party). The routine begins at step **60** with the user of the remote machine navigating to the secure Web page (e.g., via secure sockets or https: connection). From this page, the user enters a userid and password, indicating that he or she desires to perform a reverse activation. At step **62,** the ISP calls the home computer and, optionally, sends given login information (e.g., userid and password). At step **64,** the home computer, which has been setup to wait for such a call, answers with its modem. For example, step **64** generates an interrupt on the modem's serial port. The modem (or other routine) may also discriminate the signal to ensure that the incoming call is a data call (as opposed to voice or a fax). If the home computer does not answer within a given time, an error message is sent to the user at the remote machine (not shown). If the modem answers, the home computer goes from a standby to a normal mode of operation. At step **66,** the client routine authenticates the ISP call. The routine then continues at step **68** with the home computer switching to a PPP connection mode, during which the computer logs into the ISP in the usual manner. Alternatively, the home computer hangs up the connection and calls back the ISP to initiate the PPP connection.

Control then shifts to the ISP where, at step **70,** the ISP accepts or rejects the home computer's PPP login. On the client, the control routine running on that computer activates the home control application (step **69**). Alternatiely, that application may have already been started by the user at some earlier time, as previously described. Back at the ISP, the routine assigns the home computer an Internet Protocol (IP) address, which is then sent to the remote machine (step **72**). At step **74,** the remote machine operating routine registers the client IP address for a remote end of the home control application, which is also running on the remote machine. At step **76,** the home control application initiates a request to control a given device, an interface, or the like, at the home. At step **78,** the home control application running on the client controls the device or interface (as the case may be) as per the user's request. If the control function cannot be carried out within a given timeout period at step **80,** the routine disconnects the home computer from the ISP at step **82.** This completes the processing.

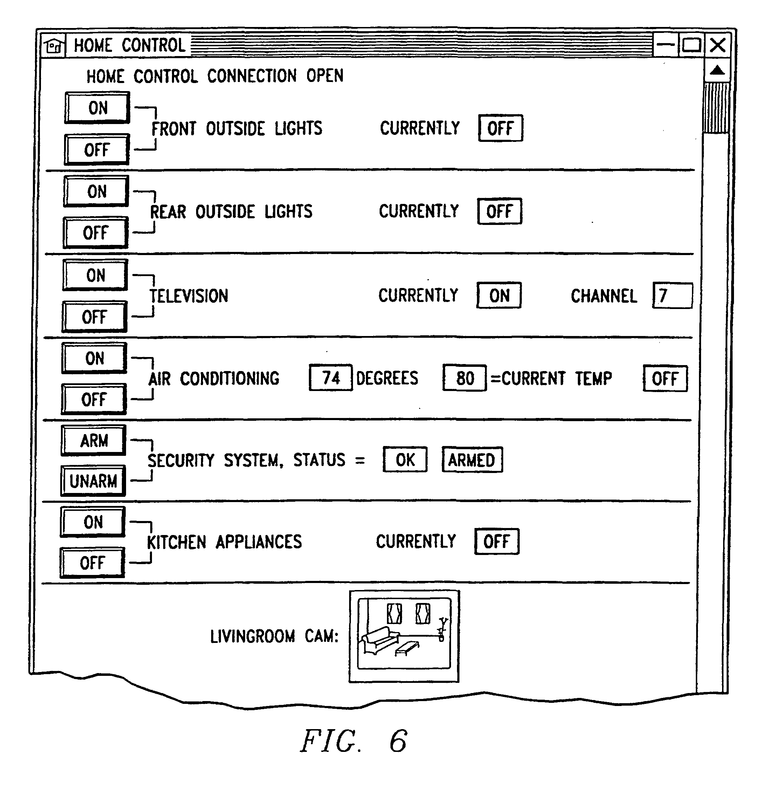

**Figure 6** illustrates a representative user interface for the home control application running on the remote machine according to the preferred embodiment. Of course, this interface is merely illustrative of the functionality. As can be seen, the interface control includes a panel identifying each of the controlled devices. In this example, the front outside lights may be positioned on or off, and the current operating condition is illustrated as off. The rear outside lights are in a similar condition. The television is identified as being currently on and tuned to Channel 7. The air conditioning unit is off, with the indoor temperature at 74 degrees and the outdoor temperature at 80 degrees. The security system is shown as armed and at a nominal operating status. The kitchen appliances are off. A live video shot, for example, of the user's living room, is also available from the interface. One of ordinary skill will readily appreciate that, using this remote interface, various operating conditions of these devices and systems may be readily monitored or changed as desired. Further, if the remote machine is a pervasive computing device, such as a portable wireless computer, the user can control the various device settings whilst he or she is on the move (eg driving home, using public transport etc).

As noted above, the particular purpose or operation of the home computer application is not limited. Thus, for example, the application (or one or more applications) may be used to control a lighting system, to control a sprinkler system, to control a video camera to feed video frames, to activate a heating or cooling system, to open a garage door, to activate a lock, to initiate a security scan, or any other type of activity that the user desires. In the preferred embodiment, the user of the remote machine connects to his or her home computer to invoke X-10 functions, telnet sessions or other activities with the client machine. After an explicit disconnect command or timeout, the home computer is disconnected and may be powered down into a low power mode as previously described.

Thus, in the preferred embodiment, the user at the remote machine navigates to a secure Web page and initiates a connection to the target computer. If security is not a concern, alternate techniques may be used to initiate the connection. Thus, for example, another way of initiating the request for the service is for the user (at the remote machine) to transmit an e-mail to the home computer, perhaps with a special character string that is recognized by the ISP e-mail server. This e-mail may be a request for the service, or it may include an actual command string of information for controlling the home control application. Of course, the command string may itself be used to start a given application on the client machine. In this embodiment, once the client logs into the ISP (as previously described), the ISP assigns the client an IP address, which is then returned to the remote machine for use by the home control application executing on that machine.

Many other variations are within the scope of the present invention. Thus, as briefly mentioned above, once the ISP verifies itself to the home computer, the initial connection between the ISP and the home computer may be dropped (i.e. terminated). At this point, the home computer is controlled (through a control program) to dial the ISP normally (through its native dialup networking capability) and present itself for connection to the ISP in the usual manner. Once this connection is established, a message is returned to the remote machine, which may then establish a socket to the application in the manner previously described. This technique is somewhat more secure than the technique described above but requires two connections instead of one. In either case, the ISP makes a call and wakes up the home computer so that the user of the remote machine can control a local application.

The control routines described above are distributed across the remote machine, the ISP, and the home (or other target) computer or device. The routines are implemented as a set of instructions (computer program code) in a code module resident in or downloadable to the random access memory of a computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or downloaded via the Internet or other computer network.

In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

## Claims

1. A method for enabling a remote computer (25) having access to a computer network (14) to command a target computer (27) for the purpose of controlling a device (29, 35) associated with said target computer, said computer being able to connect to the network a via service provider computer (33), **characterised by**:
initiating a service request from the remote computer for requesting a service from the target computer (step 60);
responsive to the service request, establishing a reverse service provider connection by the service provider between the service provider computer and the target computer; and
commanding the target computer from the remote computer over a network connection (steps 76, 78).

2. The method as described in Claim 1 wherein the step of establishing the reverse service provider connection includes:
executing a login sequence between the service provider computer and the target computer (steps 68, 70);
if the login sequence is successful, placing the target computer in a first communications mode;
issuing a network address to the target computer;
forwarding the network address to the remote computer (step 72); and
establishing a communications path between the remote computer and the target computer.

3. The method as described in Claim 1 wherein the step of establishing the reverse service provider connection comprises:
executing a login sequence between the service provider computer and the target computer;
if the login sequence is successful, terminating a connection between the service provider computer and the target computer (step 82); and
initiating a connection between the target computer and the service provider computer using the target computer's native dialup networking mechanism.

4. The method as described in Claim 1, wherein the remote computer and the target computer are connected to the Internet, said method comprising the steps of;
initiating a service request from the remote computer to the target computer over a secure connection;
initiating a login sequence from the target computer to the service provider computer;
issuing an IP address to the target computer;
returning the IP address to the remote computer; and
controlling the target computer from the remote computer over the Internet connection (steps 76, 78).

5. The method as described in Claim 4 wherein the step of controlling the target computer from the remote computer includes establishing a communications path between the remote computer and the target computer.

6. The method as described in any of Claims 2 to 5 further including the step of authenticating the user prior to initiating the login sequence (step 66).

7. The method as described in any preceding claim, wherein the step of commanding the target computer from the remote computer includes:
receiving at the target computer a control command issued from the remote computer; and
responsive to the control command, initiating a command function against a given device.

8. The method as described in Claim 7 wherein the given device is a home control interface.

9. The method as described in Claim 7 or 8 wherein the control command is issued with the service request.

10. The method as described in Claim 7 or 8 wherein the control command is initiated after the reverse service provider connection is established.

11. The method as described in any preceding claim wherein the service request is initiated from a secure Web page associated with the service provider computer.

12. The method as described in any preceding claim wherein a fee is charged against a user's service provider computer account for the service request.

13. The method as described in any preceding claim wherein the service request is initiated by transmitting an e-mail from the remote computer.

14. A remote computer (25) having access to a computer network (14), said computer network comprising a service provider computer (33), said remote computer being able to connect to said computer network via said service provider computer in order to remotely command a target computer for the purpose of controlling a device associated with said target computer, **characterised by**:
a processor;
a target control application including means for generating a display interface for use in controlling the device; and
a control program executed by the processor comprising:
means for issuing a service request for requesting a service from the target computer, wherein responsive to the service request a reverse service provider connection is established by the service provider between the service provider computer and the target computer; and
means for controlling the target control application to issue a control command over a network connection to remotely control a device associated with said target computer.

15. The computer of claim 14 further comprising:
means for receiving an IP address identifying said target computer;
means for registering the IP address to the target control application.

16. A target computer (27) able to connect to a service provider computer (33) for the purpose of controlling a device (29, 35), comprising:
a processor;
a modem;
a target control application for controlling the device; and
a control program executed by the processor comprising:
means, responsive to an interrupt at the modem from said service provider computer, for switching to a first communications mode;
means for executing a login sequence with the service provider computer; and
means, responsive to receipt of a control command from a remote computer, for controlling the device through the target control application.

17. A computer operable at a service provider (33), comprising:
a processor;
a control program executed by the processor comprising:
means for establishing a reverse service provider connection between a computer operable at a service provider and a target computer, responsive to a service request from a remote computer, for contacting a target computer for the purpose of controlling a device associated with said target computer;
means for executing a login sequence with the target computer.

18. The computer of claim 17 further comprising:
means for issuing an IP address to the target computer if the login sequence is successful; and
means for providing the IP address to the remote computer to enable a user of the remote computer to control a device associated with the target computer.

19. A computer program product in a computer readable medium, comprising:
a target control application for use in controlling a device, the target control application having a first component executable on a target computer (27) and a second component executable on a remote computer (25); and
a control routine operable at a service provider (33), said computer program product **characterised by** said second component comprising:
program code for issuing a service request for requesting a service from the target computer (step 60), wherein responsive to the service request a reverse service provider connection is established by the service provider between a service provider computer and the target computer; and
program code for controlling the second component of the target control application to issue a control command to the first component at the target computer to remotely control a device associated with said target computer;
and wherein the first component comprises:
program code for switching to a communications mode;
program code for executing a login sequence to the service provider computer; and
program code, responsive to receipt of the control command, for controlling the device through the target control application second component; and
said control routine operable at the service provider computer comprising:
program code, responsive to the service request from the remote computer, for contacting the target computer; and
program code for executing the login sequence with the target computer.

20. The computer program product of claim 19, wherein the second component further comprises:
program code for receiving an IP address identifying the target computer; and
program code for registering the IP address to the target control application second component, and wherein the control routine operable at the service provider computer further comprises:
program code for issuing the IP address; and
program code for providing the IP address to the remote computer.

21. The computer program product as described in claim 19 or 20, wherein the device is a smart network interface (31) for controlling any devices attached thereto.

22. The computer program product as described in Claim 21 wherein the smart network (31) interface is an X-10 interface.

23. A computer program product in a computer readable medium, comprising the target control application and the control program of claim 14 or 15.

24. A computer program product in a computer readable medium, comprising the target control application and the control program of claim 16.

25. A computer program product in a computer readable medium, comprising the control program of claim 17 or 18.

## Patentansprüche

1. Verfahren, mit dem ein entfernter Computer (25) mit Zugang zu einem Computernetzwerk (14) in die Lage versetzt wird, einem Zielcomputer (27) Befehle zu erteilen, um so eine dem Zielcomputer zugehörige Einheit (29, 35) zu steuern, wobei der Computer über einen Computer eines Dienstanbieters (33) eine Verbindung mit dem Netzwerk herstellen kann, **gekennzeichnet durch**:
Initialisieren einer Dienstanforderung **durch** den entfernten Computer, mit der ein Dienst von dem Zielcomputer angefordert wird (Schritt 60);
Herstellen einer entgegengesetzten Dienstanbieterverbindung zwischen dem Computer des Dienstanbieters und dem Zielcomputer **durch** den Dienstanbieter als Reaktion auf die Dienstanforderung; und
Erteilen von Befehlen von dem entfernten Computer über eine Netzwerkverbindung an den Zielcomputer (Schritte 76, 78).

2. Verfahren nach Anspruch 1, wobei der Schritt der Herstellung einer entgegengesetzten Dienstanbieterverbindung Folgendes beinhaltet:
Ausführen einer Anmeldesequenz zwischen dem Computer des Dienstanbieters und dem Zielcomputer (Schritte 68, 70); Versetzen des Zielcomputers in eine erste Übertragungsbetriebsart, wenn die Anmeldesequenz erfolgreich ist;
Ausgeben einer Netzwerkadresse an den Zielcomputer;
Weiterleiten der Netzwerkadresse an den entfernten Computer (Schritt 72); und
Herstellen eines Übertragungspfads zwischen dem entfernten Computer und dem Zielcomputer.

3. Verfahren nach Anspruch 1, wobei der Schritt der Herstellung einer entgegengesetzten Dienstanbieterverbindung Folgendes umfasst:
Ausführen einer Anmeldesequenz zwischen dem Computer des Dienstanbieters und dem Zielcomputer;
Beenden einer Verbindung zwischen dem Computer des Dienstanbieters und dem Zielcomputer (Schritt 82), wenn die Anmeldesequenz erfolgreich ist; und
Initialisieren einer Verbindung zwischen dem Zielcomputer und dem Computer des Dienstanbieters unter Verwendung des systemeigenen Mechanismus des Zielcomputers für einen Verbindungsaufbau zum Netzwerk.

4. Verfahren nach Anspruch 1, wobei der entfernte Computer und der Zielcomputer über das Internet miteinander verbunden sind, wobei das Verfahren die folgenden Schritte umfasst:
Initialisieren einer Dienstanforderung von dem entfernten Computer an den Zielcomputer über eine sichere Verbindung;
Initialisieren einer Anmeldesequenz von dem Zielcomputer an den Computer des Dienstanbieters;
Ausgeben einer IP-Adresse an den Zielcomputer;
Zurückgeben der IP-Adresse an den entfernten Computer; und
Steuern des Zielcomputers von dem entfernten Computer aus über die Internetverbindung (Schritte 76, 78).

5. Verfahren nach Anspruch 4, wobei der Schritt des Steuerns des Zielcomputers von dem entfernten Computer aus die Herstellung eines Übertragungspfads zwischen dem entfernten Computer und dem Zielcomputer beinhaltet.

6. Verfahren nach einem beliebigen der Ansprüche 2 bis 5, das weiter den Schritt der Berechtigungsprüfung des Benutzers vor dem Initialisieren der Anmeldesequenz beinhaltet (Schritt 66).

7. Verfahren nach einem beliebigen vorangegangenen Anspruch, wobei der Schritt der Befehlserteilung von dem entfernten Computer an den Zielcomputer Folgendes beinhaltet:
Empfangen eines Steuerbefehls, der von dem entfernten Computer ausgegeben wurde, durch den Zielcomputer; und
Initialisieren einer Steuerfunktion für eine gegebene Einheit als Reaktion auf diesen Steuerbefehl.

8. Verfahren nach Anspruch 7, wobei es sich bei der gegebenen Einheit um eine Schnittstelle für die Haussteuerung handelt.

9. Verfahren nach Anspruch 7 oder 8, wobei der Steuerbefehl mit der Dienstanforderung ausgegeben wird.

10. Verfahren nach Anspruch 7 oder 8, wobei der Steuerbefehl initialisiert wird, nachdem die entgegengesetzte Dienstanbieterverbindung hergestellt wurde.

11. Verfahren nach einem beliebigen vorangegangenen Anspruch, wobei die Dienstanforderung von einer sicheren Webseite aus initialisiert wird, die dem Computer des Dienstanbieters zugehörig ist.

12. Verfahren nach einem beliebigen vorangegangenen Anspruch, wobei dem Dienstanbieter-Computerkonto eines Benutzers eine Gebühr für die Dienstanforderung in Rechnung gestellt wird.

13. Verfahren nach einem beliebigen vorangegangenen Anspruch, wobei die Dienstanforderung initialisiert wird, indem eine eMail von dem entfernten Computer übertragen wird.

14. Entfernter Computer (25) mit Zugang zu einem Computernetzwerk (14), wobei das Computernetzwerk einen Computer eines Dienstanbieters (33) umfasst, wobei der entfernte Computer über den Computer des Dienstanbieters eine Verbindung zu dem Computernetzwerk herstellen kann, um aus der Ferne einem Zielcomputer Befehle zu erteilen, um so eine dem Zielcomputer zugehörige Einheit zu steuern, **gekennzeichnet durch**:
einen Prozessor;
eine Ziel-Steueranwendung, die Mittel für die Erzeugung einer Bildschirmoberfläche beinhaltet, die zur Steuerung der Einheit verwendet wird; und
ein Steuerprogramm, das von dem Prozessor ausgeführt wird und Folgendes umfasst:
Mittel für die Ausgabe einer Dienstanforderung, mit der ein Dienst von dem Zielcomputer angefordert wird, wobei als Reaktion auf die Dienstanforderung von dem Dienstanbieter eine entgegengesetzte Dienstanbieterverbindung zwischen dem Computer des Dienstanbieters und dem Zielcomputer hergestellt wird; und
Mittel für die Steuerung der Ziel-Steueranwendung dergestalt, dass ein Steuerbefehl über eine Netzwerkverbindung ausgegeben wird, um damit eine dem Zielcomputer zugehörige Einheit aus der Ferne zu steuern.

15. Computer aus Anspruch 14, der weiter Folgendes umfasst:
ein Mittel für den Empfang einer IP-Adresse, die den Zielcomputer angibt;
ein Mittel für die Registrierung der IP-Adresse in der Ziel-Steueranwendung.

16. Zielcomputer (27), der eine Verbindung zu einem Computer eines Dienstanbieters (33) herstellen kann, um so eine Einheit (29, 35) zu steuern, der Folgendes umfasst:
einen Prozessor;
einen Modem;
eine Ziel-Steueranwendung für die Steuerung der Einheit; und
ein Steuerprogramm, das von dem Prozessor ausgeführt wird und Folgendes umfasst:
ein Mittel, das als Reaktion auf eine Unterbrechung des Modem durch den Computer des Dienstanbieters in eine erste Übertragungsbetriebsart umschaltet;
ein Mittel für die Ausführung einer Anmeldesequenz durch den Computer des Dienstanbieters; und
ein Mittel, das als Reaktion auf den Empfang eines Steuerbefehls von einem entfernten Computer die Einheit über die Ziel-Steueranwendung steuert.

17. Computer, der von einem Dienstanbieter (33) betrieben werden kann und Folgendes umfasst:
einen Prozessor;
eine Steueranwendung, die von dem Prozessor ausgeführt wird und Folgendes umfasst:
ein Mittel für die Herstellung einer entgegengesetzten Dienstanbieterverbindung zwischen einem Computer, der von einem Dienstanbieter betrieben werden kann, und einem Zielcomputer, wobei das Mittel auf eine Dienstanforderung von einem entfernten Computer reagiert, um Kontakt mit einem Zielcomputer herzustellen, um so eine dem Zielcomputer zugehörige Einheit zu steuern;
ein Mittel für die Ausführung einer Anmeldesequenz durch den Zielcomputer.

18. Computer nach Anspruch 17, der weiter Folgendes umfasst:
ein Mittel für die Ausgabe einer IP-Adresse an den Zielcomputer, wenn die Anmeldesequenz erfolgreich ist; und
ein Mittel für die Bereitstellung der IP-Adresse an den entfernten Computer, um einem Benutzer des entfernten Computers zu ermöglichen, eine dem Zielcomputer zugehörige Einheit zu steuern.

19. Computerprogrammprodukt auf einem computerlesbaren Medium, das Folgendes umfasst:
eine Ziel-Steueranwendung, die zur Steuerung einer Einheit verwendet wird, wobei die Ziel-Steueranwendung über eine erste Komponente, die auf einem Zielcomputer (27) ausführbar ist, sowie über eine zweite Komponente, die auf einem entfernten Computer (25) ausführbar ist, verfügt; und
eine Steuerroutine, die von einem Dienstanbieter (33) ausgeführt werden kann, wobei das Computerprogrammprodukt **dadurch gekennzeichnet ist, dass** die zweite Komponente Folgendes umfasst:
Programmcode für die Ausgabe einer Dienstanforderung, mit der ein Dienst von dem Zielcomputer angefordert wird (Schritt 60), wobei als Reaktion auf die Dienstanforderung durch den Dienstanbieter eine entgegengesetzte Dienstanbieterverbindung zwischen einem Computer des Dienstanbieters und dem Zielcomputer hergestellt wird; und
Programmcode für die Steuerung der zweiten Komponente der Ziel-Steueranwendung, um so einen Steuerbefehl an die erste Komponente des Zielcomputers auszugeben, eine dem Zielcomputer zugehörige Einheit aus der Ferne zu steuern;
und wobei die erste Komponente Folgendes umfasst:
Programmcode für das Umschalten in eine Übertragungsbetriebsart;
Programmcode für die Ausführung einer Anmeldesequenz durch den Computer des Dienstanbieters; und
Programmcode, der auf den Empfang des Steuerbefehls reagiert, um die Einheit über die zweite Komponente der Ziel-Steueranwendung zu steuern; und
wobei die Steuerroutine, die durch den Computer des Dienstanbieters ausgeführt werden kann, Folgendes umfasst:
Programmcode, der auf die Dienstanforderung von dem entfernten Computer reagiert, um Kontakt mit dem Zielcomputer herzustellen; und
Programmcode für die Ausführung der Anmeldesequenz durch den Zielcomputer.

20. Computerprogrammprodukt nach Anspruch 19, wobei die zweite Komponente weiter Folgendes umfasst:
Programmcode für den Empfang einer IP-Adresse, die den Zielcomputer angibt; und
Programmcode für die Registrierung der IP-Adresse in der zweiten Komponente der Ziel-Steueranwendung, und wobei die Steuerroutine, die auf dem Computer des Dienstanbieters ausgeführt werden kann, weiter Folgendes umfasst:
Programmcode für die Ausgabe der IP-Adresse; und
Programmcode für die Bereitstellung der IP-Adresse an den entfernten Computer.

21. Computerprogrammprodukt nach Anspruch 19 oder 20, wobei die Einheit eine intelligente Netzwerkschnittstelle (31) für die Steuerung beliebiger daran angeschlossener Einheiten ist.

22. Computerprogrammprodukt nach Anspruch 21, wobei die Schnittstelle des intelligenten Netzwerks (31) eine X-10-Schnittstelle ist.

23. Computerprogrammprodukt auf einem computerlesbaren Medium, das die Ziel-Steueranwendung und das Steuerprogramm aus Anspruch 14 oder 15 umfasst.

24. Computerprogrammprodukt auf einem computerlesbaren Medium, das die Ziel-Steueranwendung und das Steuerprogramm aus Anspruch 16 umfasst.

25. Computerprogrammprodukt auf einem computerlesbaren Medium, welches das Steuerprogramm aus Anspruch 17 oder 18 umfasst.

## Revendications

1. Un procédé pour permettre à un ordinateur distant (25) d'avoir accès à un réseau d'ordinateurs (14) pour prendre la commande d'un ordinateur cible (27), dans le but de commander un dispositif (29, 35) associé audit ordinateur cible, ledit ordinateur étant en mesure de se connecter au réseau via un ordinateur du fournisseur de service (33), **caractérisé par** :
le lancement d'une requête de service depuis l'ordinateur distant, pour demander un service auprès de l'ordinateur cible (étape 60) ;
en réponse à la requête de service, établir une connexion inverse au fournisseur de service, de la part du fournisseur de service, entre l'ordinateur du fournisseur de service et l'ordinateur cible ; et
prendre la commande de l'ordinateur cible, depuis l'ordinateur distant, sur une connexion sur réseau (étapes 76, 78).

2. Le procédé selon la Revendication 1, dans lequel l'étape d'établissement de la connexion inverse au fournisseur de service comprend :
l'exécution d'une séquence d'ouverture de session entre l'ordinateur du fournisseur de service et l'ordinateur cible (étapes 68, 70) ;
si la séquence d'ouverture de session réussit, placer l'ordinateur cible en un premier mode de communication ;
envoyer une adresse de réseau à l'ordinateur cible ;
transmettre l'adresse de réseau à l'ordinateur distant (étape 72) ; et
établir un chemin de communication entre l'ordinateur distant et l'ordinateur cible.

3. Le procédé selon la Revendication 1, dans lequel l'étape d'établissement de la connexion inverse au fournisseur de service comprend :
l'exécution d'une séquence d'ouverture de session entre l'ordinateur du fournisseur de service et l'ordinateur cible ;
si la séquence d'ouverture de session réussit, achever la connexion entre l'ordinateur du fournisseur de service et l'ordinateur cible (étape 82) ; et
lancer une connexion entre l'ordinateur cible et l'ordinateur du fournisseur de service, par utilisation du mécanisme en réseau de composition de numérotation natif de l'ordinateur cible.

4. Le procédé selon la Revendication 1, dans lequel l'ordinateur distant et l'ordinateur cible sont connectés à l'Internet, ledit procédé comprenant les étapes consistant à :
lancer une requête de service depuis l'ordinateur distant à l'ordinateur cible, sur une connexion sécurisée ;
lancer une séquence d'ouverture de session depuis l'ordinateur cible à l'ordinateur de fournisseur de service ;
envoyer une adresse IP à l'ordinateur cible ;
retourner l'adresse IP à l'ordinateur distant ; et
commander l'ordinateur cible depuis l'ordinateur distant, sur la connexion Internet (étapes 76, 78).

5. Le procédé selon la Revendication 4, dans lequel l'étape de commande de l'ordinateur cible, depuis l'ordinateur distant, inclut l'établissement d'un chemin de communication entre l'ordinateur distant et l'ordinateur cible.

6. Le procédé selon l'une quelconque des Revendications 2 à 5, comprenant en outre l'étape d'authentification de l'utilisateur, avant de lancer la séquence d'ouverture de session (étape 66).

7. Le procédé selon l'une quelconque des revendications précédentes, dans lequel l'étape de prise de commande de l'ordinateur cible, depuis l'ordinateur distant, comprend :
la réception, au niveau de l'ordinateur cible, d'une instruction de commande envoyée par l'ordinateur distant ; et
en réponse à l'instruction de commande, le lancement d'une fonction de commande concernant un dispositif donné.

8. Le procédé selon la Revendication 7, dans lequel le dispositif donné est une interface de commande domestique.

9. Le procédé selon la Revendication 7 ou 8, dans lequel l'instruction de commande est envoyée avec la requête de service.

10. Le procédé selon la Revendication 7 ou 8, dans lequel l'instruction de commande est lancée après que la connexion inverse au fournisseur de service ait été établie.

11. Le procédé selon l'une quelconque des Revendications précédentes, dans lequel la requête de service est lancée depuis une page Web sécurisée, associée à l'ordinateur du fournisseur de service.

12. Le procédé selon l'une quelconque des revendications précédentes, dans lequel une taxe est imputée financièrement à un compte concernant l'ordinateur du fournisseur de service de l'utilisateur pour la requête de service.

13. Le procédé selon l'une quelconque des revendications précédentes, dans lequel la requête de service est lancée par transmission d'un courriel depuis l'ordinateur distant.

14. Un ordinateur distant (25), ayant accès à un réseau d'ordinateurs (14), ledit réseau d'ordinateurs comprenant un ordinateur de fournisseur de service (33), ledit ordinateur distant étant en mesure de se connecter audit réseau d'ordinateurs via ledit ordinateur de fournisseur de service, afin de prendre la commande à distance d'un ordinateur cible, dans le but de commander un dispositif associé audit ordinateur cible, **caractérisé par** :
un processeur ;
une application de commande de cible, comprenant des moyens pour générer une interface d'affichage, pour utilisation lors de la commande du dispositif ; et
un programme de commande, exécuté par le processus, comprenant :
des moyens, pour envoyer une requête de service pour demander un service auprès de l'ordinateur cible, dans lequel, en réponse à la requête de service, une connexion inverse au fournisseur est établie par le fournisseur de service entre l'ordinateur du fournisseur de service et l'ordinateur cible ; et
des moyens, pour commander l'application de commande de consigne, afin d'envoyer une instruction de commande sur une connexion sur réseau, afin de commander à distance un dispositif associé audit ordinateur cible.

15. L'ordinateur selon la revendication 14, comprenant en outre :
des moyens pour recevoir une adresse IP, identifiant ledit ordinateur cible ;
des moyens pour enregistrer l'adresse IP sur l'application de commande cible.

16. Un ordinateur cible (27) apte à se connecter à un ordinateur de fournisseur de service (33), dans le but de commander un dispositif (29, 35), comprenant :
un processeur ;
un modem ;
une application de commande de cible pour commander le dispositif ; et
un programme de commande exécuté par le processeur, comprenant :
des moyens, réagissant à une interruption au niveau du modem, depuis ledit ordinateur du fournisseur de service, pour commuter en un premier mode de communication ;
des moyens pour exécuter une séquence d'ouverture de session avec l'ordinateur du fournisseur de service ; et
des moyens, en réponse à la réception d'une instruction de commande émanant d'un ordinateur distant, pour commander le dispositif par l'application de commande de cible.

17. Un ordinateur susceptible de fonctionner au niveau d'un fournisseur de service (33), comprenant :
un processeur ;
un programme de commande, exécuté par le processeur, comprenant :
des moyens, pour établir une connexion inverse au fournisseur de service, entre un ordinateur pouvant fonctionner au fournisseur de service et un ordinateur cible, en réponse à une requête de service émanant d'un ordinateur distant, pour entrer en contact avec un ordinateur cible, dans le but de commander un dispositif associé audit ordinateur cible ;
des moyens, pour exécuter une séquence d'ouverture de session avec l'ordinateur cible.

18. L'ordinateur selon la revendication 17, comprenant en outre :
des moyens, pour envoyer une adresse IP à l'ordinateur cible, si la séquence d'ouverture de session réussit ; et
des moyens, pour fournir l'adresse IP à l'ordinateur distant, pour permettre à un utilisateur de l'ordinateur distant de commander un dispositif associé à l'ordinateur cible.

19. Un produit de programme pour ordinateur, dans un support lisible par ordinateur, comprenant :
une application de commande de cible pour utilisation dans la commande d'un dispositif, l'application de commande de cible ayant un premier composant, exécutable sur un ordinateur cible (27), et un deuxième composant, exécutable sur un ordinateur distant (25) ; et
un sous-programme de commande, susceptible de fonctionner au niveau du fournisseur de service (33), ledit produit de programme pour ordinateur étant **caractérisé par le fait que** le deuxième composant comprend :
un code de programme pour envoyer une requête de service pour demander un service auprès de l'ordinateur cible (étape 60), dans lequel, en réponse à la requête de service, une connexion inverse au fournisseur de service est établie par le fournisseur de service entre un ordinateur du fournisseur de service et l'ordinateur cible ; et
un code de programme pour commander le deuxième composant de l'application de commande de cible, afin d'envoyer une instruction de commande au premier composant sur l'ordinateur cible pour commander à distance un dispositif associé audit ordinateur cible ;
et dans lequel le premier composant comprend :
un code de programme, pour commuter en un mode de communication ;
un code de programme pour exécuter une séquence d'ouverture de session sur l'ordinateur du fournisseur de service ; et
un code de programme, réagissant à la réception de l'instruction de commande, pour commander le dispositif par l'intermédiaire du deuxième composant d'application de commande de consigne ; et
ledit sous-programme de commande, susceptible de fonctionner au niveau de l'ordinateur du fournisseur de service, comprenant :
un code de programme, réagissant à la requête de service, émanant de l'ordinateur distant, pour entrer en contact avec l'ordinateur cible ; et
un code de programme, pour exécuter la séquence d'ouverture de session avec l'ordinateur cible.

20. Le produit de programme pour ordinateur selon la revendication 19, dans lequel le deuxième composant comprend en outre :
un code de programme, pour recevoir une adresse IP, identifiant l'ordinateur cible ; et
un code de programme pour enregistrer l'adresse IP au deuxième composant d'application de commande de cible, et dans lequel le sous-programme de commande, susceptible de fonctionner au niveau de l'ordinateur du fournisseur de service, comprend en outre :
un code de programme pour envoyer l'adresse IP ; et
un code de programme pour fournir l'adresse IP à l'ordinateur distant.

21. Le produit de programme pour ordinateur selon la revendication 19 ou 20, dans lequel le dispositif est une interface de réseau intelligente (31), pour commander d'éventuels dispositifs lui étant attachés.

22. Le produit de programme pour ordinateur selon la Revendication 21, dans lequel l'interface de réseau intelligente (31) est une interface X-10.

23. Un produit de programme pour ordinateur dans un support lisible par ordinateur, comprenant l'application de commande de cible et le programme de commande selon la revendication 14 ou 15.

24. Un produit de programme pour ordinateur dans un support lisible par ordinateur, comprenant l'application de commande de cible et le programme de commande selon la revendication 16.

25. Un produit de programme pour ordinateur dans un support lisible par ordinateur, comprenant le programme de commande selon la revendication 17 ou 18.
